Europäisches Patentamt

European Patent Office

Office européen des brevets

(19)

(11) Veröffentlichungsnummer : **0 161 517 B1**

(12) **EUROPÄISCHE PATENTSCHRIFT**

(45) Veröffentlichungstag der Patentschrift :
11.01.89

(51) Int. Cl.⁴ : **A 01 B 15/00, A 01 B   3/18**

(21) Anmeldenummer : 85104642.5

(22) Anmeldetag : 17.04.85

(54) **Drehpflug mit einem Pendelstütz- und Nachlauftransportrad.**

(30) Priorität : 16.05.84 DE 3418136

(43) Veröffentlichungstag der Anmeldung :
21.11.85 Patentblatt 85/47

(45) Bekanntmachung des Hinweises auf die Patenterteilung : 11.01.89 Patentblatt 89/02

(84) Benannte Vertragsstaaten :
CH FR GB LI NL SE

(56) Entgegenhaltungen :
DE--A-- 3 033 791
DE--U-- 7 014 464
DE--U-- 7 620 622

(73) Patentinhaber : H. Niemeyer Söhne GmbH & Co. KG
Heinrich-Niemeyer-Strasse 52
D-4446 Hörstel (DE)

(72) Erfinder : Barlage, Bruno, Dipl.-Ing.
Beethovenstrasse 13'
D-4446 Hörstel (DE)
Erfinder : Laumann, Bernhard
Lindenstrasse 6
D-4446 Hörstel (DE)

(74) Vertreter : Busse & Busse Patentanwälte
Postfach 1226 Grosshandelsring 6
D-4500 Osnabrück (DE)

EP 0 161 517 B1

## Beschreibung

Die Erfindung betrifft einen Drehpflug mit einem Pendelstütz- und Nachlauftransportrad nach dem Oberbegriff des Anspruchs 1.

Bei derartigen Drehpflügen (DE-OS 30 33 791), bei denen das Rad in den Arbeitsstellungen des Drehpfluges als Stützrad und in der halbgewendeten Transportstellung des Drehpfluges als nachlaufendes Transportrad dient, gibt die Lagervorrichtung dem Radträger eine einzige Lagerachse vor, die sowohl die Pendelachse als auch die Hochachse bildet. Die Lagerachse ist dabei jedoch durch ein am Pflugrahmen angeordnetes Gelenk zwischen zwei Stellungen verschwenkbar und in diesen arretierbar. Dies erlaubt im Pflugbetrieb eine Anordnung des Radträgers nahe am Pflugrahmen und eine Ausrichtung der Lagerachse in der Transportstellung senkrecht zum Boden. Diese Ausrichtung der Lagerachse in der Transportstellung vermeidet Höhenbewegungen des Drehpfluges bei Kurvenfahrten und beim Rangieren.

Bei diesem bekannten Drehpflug sind die Einstellungsmöglichkeiten jedoch begrenzt, während andererseits die Verstellung eine ausladende Lagervorrichtung voraussetzt, die für ihre Umstellung zudem einen erheblichen Bedienungsaufwand erfordert.

Der Erfindung liegt die Aufgabe zugrunde, einen Drehpflug der im Oberbegriff des Anspruchs 1 angegebenen Art zu schaffen, bei dem die Pendelachse für die Pflugarbeitsstellung und die Hochachse für die Transportstellung voneinander unabhängig ausrichtbar sind und bei dem bei einfacher und kompakter Ausbildung der Lagervorrichtung eine leichte und schnelle Umstellung möglich ist. Diese Aufgabe löst die Erfindung mit den im kennzeichnenden Teil des Anspruchs 1 angegebenen Merkmale. Hinsichtlich weiterer Ausgestaltungen wird auf die Ansprüche 2 bis 7 verwiesen.

Da die Pendelachse für den Pflugbetrieb und die Hochachse für den Transportbetrieb durch gesonderte Achsen der Lagervorrichtung definiert werden, ist eine voneinander unabhängige Feinabstimmung der Achsausrichtungen auf die Stellungen des Pflugrahmens möglich. Für die wahlweise Freigabe der Bewegbarkeit des Radträgers um die eine oder die andere Achse genügt ein einfacher Handgriff. Die Lagervorrichtung ist dabei zugleich ein kompaktes, unempfindliches und wartungsfreundliches Bauteil, das zugleich auch einfach zu montieren ist.

Zwei Ausführungsbeispiele des Gegenstands der Erfindung ergeben sich aus der nachfolgenden Beschreibung und der Zeichnung. In der Zeichnung zeigen :

Fig. 1 eine abgebrochene Draufsicht auf das rückwärtige Ende eines erfindungsgemäßen Drehpfluges in Pflugarbeitsstellung,

Fig. 2 eine Seitenansicht auf das rückwärtige Ende des Drehpfluges in der Transportstellung,

Fig. 3 einen Schnitt nach der Linie III-III in Fig. 1, und

Fig. 4 einen Schnitt durch eine Lagervorrichtung einer abgewandelten Ausführung des erfindungsgemäßen Drehpfluges.

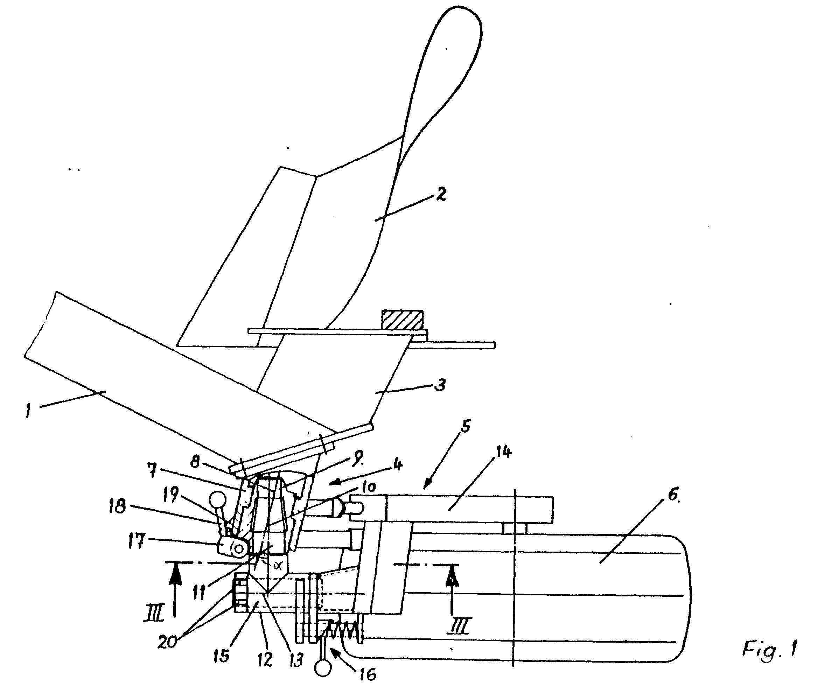

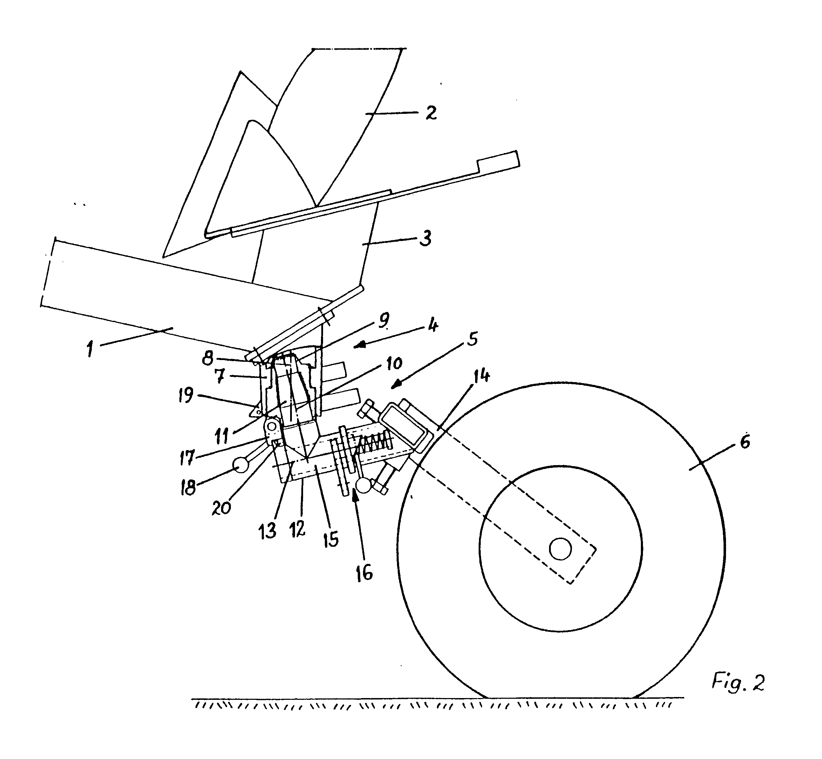

Die Fig. 1 veranschaulicht das rückwärtige Ende eines Pflugrahmens 1, der üblicherweise mit Reihen von Pflugkörpern 2 versehen ist, die jeweils über eine Anschlußvorrichtung 3 mit dem Pflugrahmen 1 verbunden sind. An dem rückwärtigen Ende des Pflugrahmens 1 ist eine Lagervorrichtung 4 angeflanscht, mittels der ein Radträger 5 eines Pendelstütz- und Nachlauftransportrades 6 gelagert ist. Die teilweise im Schnitt veranschaulichte Lagervorrichtung 4 umfaßt eine Außenlagerhülse 7, die eine erste Achse 8 vorgibt, und eine in dieser gelagerte Zwischenlagerhülse 9, die ihrerseits eine zweite Achse 10 vorgibt. In der Zwischenlagerhülse 9 ist der Radträger 5 mittels eines Zapfens 11 gelagert, der rechtwinklig von einer Hülse 12 absteht, die eine Klappachse 13 für einen Teil 14 des Radträgers 5 vorgibt. Der Teil 14 des Radträgers 5 ist in der Hülse 12 mittels eines Zapfens 15 gelagert, und es ist eine Verriegelungsvorrichtung 16 vorgesehen, mittels der der Teil 14 in seiner in Fig. 1 veranschaulichten Klapplage für den Pflugbetrieb und in der in Fig. 2 dargestellten Klapplage für den Transportbetrieb arretierbar ist.

Bei den dargestellten Beispielen gibt die Außenlagerhülse 7 mit ihrer Achse 8 die Hochachse für den Transportbetrieb und die Zwischenlagerhülse 9 mit ihrer Achse 10 die Pendelachse für den Pflugbetrieb vor. Grundsätzlich ist jedoch auch eine umgekehrte Vorgabe möglich. Um sicherzustellen, daß der Radträger 5 in den Arbeitsstellungen des Drehpfluges nur um die Pendelachse 10 und in der Transportstellung des Drehpfluges nur um die Hochachse 8 drehbeweglich ist, ist zur wahlweisen Freigabe der Bewegbarkeit des Radträgers 5 um eine dieser Achsen 8, 10, eine Schaltvorrichtung vorgesehen, die bei den dargestellten Ausführungsbeispielen einen Schwenkriegel 17 mit Handhebel 18 umfaßt, der an der Zwischenlagerhülse 9 klappbar abgestützt ist. Der Schwenkriegel 17 kann wechselweise mit Verriegelungsansätzen 19 an der Außenlagerhülse 7 oder mit Verriegelungsansätzen 20 am Radträger 5 in Eingriff gebracht und in jeder der Eingriffsstellungen gesichert werden.

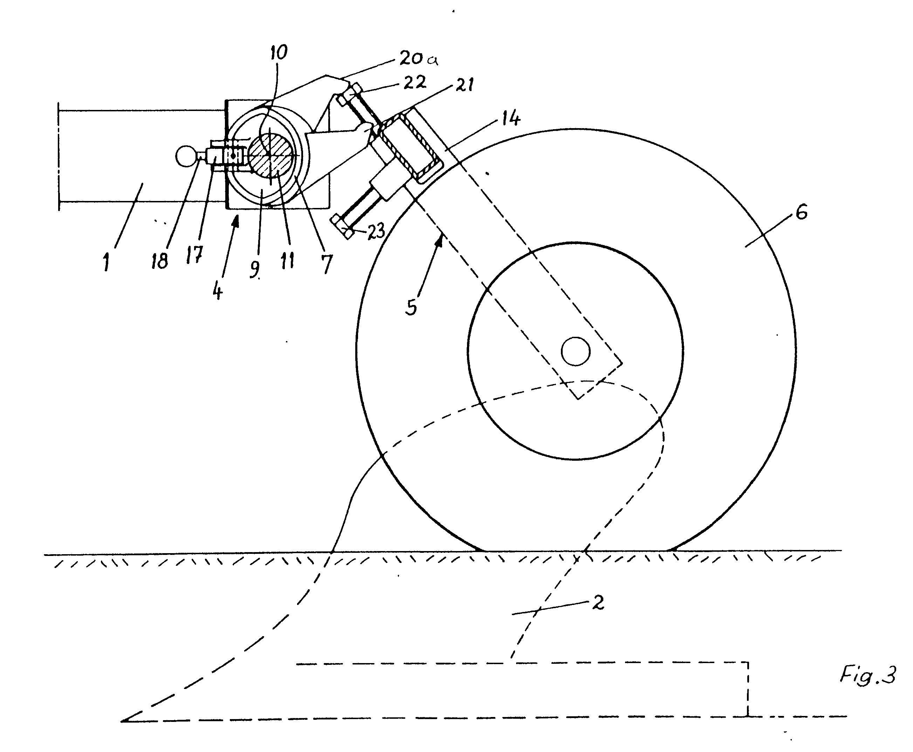

Bei der in Fig. 1 veranschaulichten Stellung des Schwenkriegels 17 ist die Zwischenlagerhülse 9 mit der Außenlagerhülse 7 verriegelt, so daß der Radträger 5 mittels seines Zapfens 11 lediglich um die Pendelachse 10 in der Zwischenlagerhülse 9 schwenkbar beweglich ist. Das Rad 6 bildet dementsprechend ein Pendelstützrad für den Pflugbetrieb des Drehpfluges, dessen Stützlage in den Arbeitsstellungen jeweils durch einen Anschlag 20a bzw. 21 am Pflugrahmen 1 definiert wird, der jeweils mit Gegenanschlägen 22 bzw. 23 am Radträger 5 zusammenwirken. Diese Gegenanschläge 22, 23 sind zur Veränderung der Stützlage als Stellschrauben ausgebildet, wie dies der Fig. 3 entnommen werden kann. Die Einstellung ist dabei für jede Arbeitstellung des Drehpfluges unabhängig möglich.

Bei der in Fig. 2 veranschaulichten Transportbetriebsstellung, bei der sich der Pflugrahmen 1 in einer halbgedrehten Zwischenstellung zwischen den Arbeitsstellungen befindet und in der der Teil 14 des Radträgers 5 um 90° um die Klappachse 13 gegenüber der Stellung nach Fig. 1 verschwenkt ist, steht der Schwenkriegel 17 in Eingriff mit den Riegelansätzen 20 am Stützträger 5, so daß die Zwischenlagerhülse 9 relativ zum Zapfen 11 arretiert ist. Dementsprechend ist der Radträger 5 lediglich um die Hochachse 8 drehbar, d. h. der Radträger 5 mit Zapfen 11 und Zwischenlagerhülse 9 kann sich in der Außenlagerhülse 7 drehen. Es versteht sich, daß die Außenlagerhülse 7 eine Achse 8 vorgibt, die so zur Transportlage des Pflugrahmens 1 ausgerichtet ist, daß sie eine Hochachse bildet, d. h. zum Boden senkrecht verläuft.

Die von der Zwischenlagerhülse 9 vorgegebene Pendelachse 10 ist so ausgerichtet, daß sie in den Arbeitstellungen des Drehpfluges senkrecht zur Furchenwand, d. h. horizontal und quer zur Arbeitsrichtung des Drehpfluges verläuft. Beide Achsen liegen zweckmäßig in einer Ebene und schneiden sich unter einem spitzen Winkel α, der die Ausrichtungsunterschiede der Ausrichtung des Pflugrahmens in den Arbeitsstellungen und in der Transportstellung des Drehpfluges berücksichtigt.

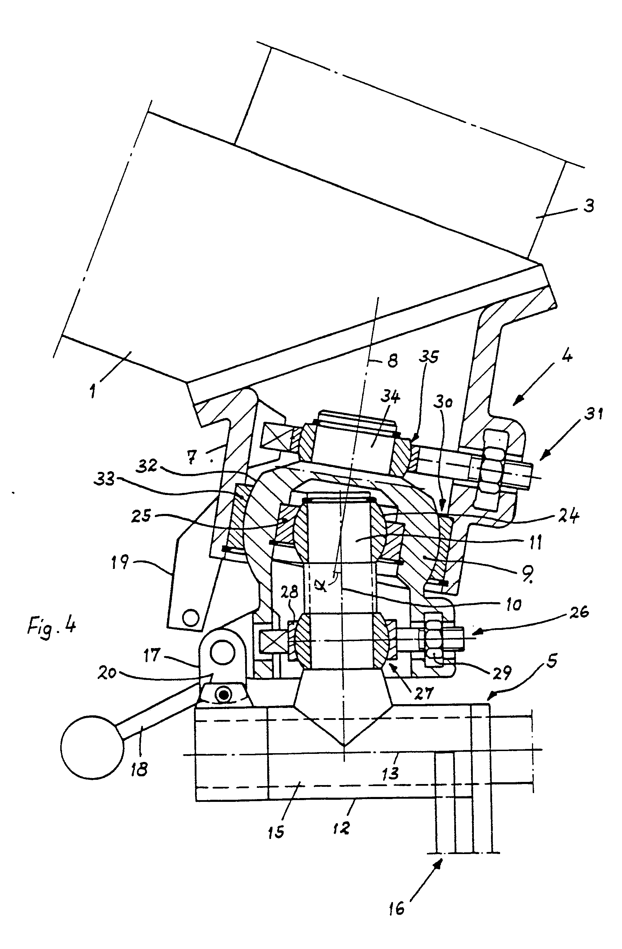

Die in Fig. 4 veranschaulichte abgewandelte Ausführung der Lagervorrichtung 4 sieht eine Möglichkeit vor, die Achsen 8, 10 jeweils unabhängig voneinander in bezug auf den Pflugrahmen ausrichten zu können. Wie der Fig. 4 näher entnommen werden kann, ist dabei der Zapfen 11 mittels einer Lagerkugel 24 in der Zwischenlagerhülse 9 gelagert, die mit einem entsprechenden kugeligen Innenlagerteil 25 versehen ist. Zur Winkelverstellung dient eine Stellvorrichtung 26, mittels der die Lage des Zapfens 11 in der Zwischenlagerhülse 9 eingestellt und fixiert werden kann. Diese Stellvorrichtung 26 umfaßt ihrerseits eine Kugellagerung 27 für den Zapfen 11, und der Außenlagerring 28 ist mittels der Stellschraube 29 in der gemeinsamen Ebene der Achsen 8, 10 verschieb- und feststellbar.

In analoger Weise ist auch die Zwischenlagerhülse 9 mittels einer kugeligen Lagerung 30 in der Außenlagerhülse 7 gelagert und mittels einer Stellvorrichtung 31 winkelverstellbar abgestützt. Hierzu ist die Zwischenlagerhülse 9 mit einer kugeligen Außenlagerfläche 32 und die Außenlagerbüchse 7 mit einem entsprechend kugeligen Lagerteil 33 versehen. Die Stellvorrichtung 31 entspricht der Stellvorrichtung 26 und wirkt auf einen Ansatz 34 an der Zwischenlagerhülse 9, der von einer kugeligen Lagerung 35 entsprechend der kugeligen Lagerung 27 umgriffen ist. Mittels der Stellvorrichtungen 26, 31 können dementsprechend die Achsen 8 und 10 jeweils voneinander unabhängig verstellt werden, so daß allen Anpassungsanforderungen der Praxis Rechnung getragen werden kann.

## Patentansprüche

1. Drehpflug mit einem Pendelstütz- und Nachlauftransportrad (6), dessen Radträger (5) mittels einer Lagervorrichtung (4) am Pflugrahmen (1) um eine in den Arbeitsstellungen des Drehpfluges waagerechte, quer zur Pflugarbeitsrichtung ausgerichtete Pendelachse (10) schwenkbar und in der Transportstellung des Drehpfluges um eine Hochachse (8) drehbar abgestützt ist, dadurch gekennzeichnet, daß die Lagervorrichtung (4) dem Radträger (5) zwei gesonderte Achsen (8 ; 10) als Pendelachse und als Hochachse vorgibt und eine Schaltvorrichtung (17, 18, 19, 20) zur wahlweisen Freigabe der Bewegbarkeit des Radträgers (5) um lediglich eine der beiden Achsen (8 ; 10) vorgesehen ist.

2. Drehpflug nach Anspruch 1, dadurch gekennzeichnet, daß die Lagervorrichtung (4) eine die erste Achse (8) vorgebende Außenlagerhülse (7) und eine darin gelagerte, die zweite Achse (10) vorgebende Zwischenlagerhülse (9) umfaßt, in der ein mit dem Radträger (5) verbundener Lagerzapfen (11) gelagert ist.

3. Drehpflug nach Anspruch 2, dadurch gekennzeichnet, daß die von der Außenlagerhülse (7) der Zwischenlagerhülse (9) vorgegebene Achse (8) die Hochachse und die von der Zwischenlagerhülse (9) dem Lagerzapfen (11) vorgegebene Achse (10) die Pendelachse ist.

4. Drehpflug nach einem oder mehreren der Ansprüche 1 bis 3, dadurch gekennzeichnet, daß die Achsen (8, 10) einer Ebene liegen und sich unter einem spitzen Winkel (α) schneiden.

5. Drehpflug nach Anspruch 2 und 4, dadurch gekennzeichnet, daß der Lagerzapfen (11) des Radträgers (5) mittels einer Lagerkugel in der Zwischenlagerhülse gelagert und mittels einer Stellvorrichtung winkeleinstellbar abgestützt ist.

6. Drehpflug nach Anspruch 5, dadurch gekennzeichnet, daß die Zwischenlagerhülse mittels einer kugeligen Lagerung in der Außenlagerhülse gelagert und ihrerseits mittels einer Stellvorrichtung winkeleinstellbar abgestützt ist.

7. Drehpflug nach einem oder mehreren der Ansprüche 1 bis 6, dadurch gekennzeichnet, daß als Schaltvorrichtung ein Schwenkriegel (17) an der Zwischenlagerhülse (9) klappbar abgestützt ist, der wechselweise mit Verriegelungsansätzen (19) an der Außenlagerhülse (7) oder am Radträger (5) in Eingriff bringbar ist.

## Claims

1. A turnover plough having a pendulum supporting wheel (6) with castor action for transport, the wheel carrier (5) of which is supported on the plough frame (1) by means of a bearing arrangement (4) for swinging about a pendulum axis (1) which is horizontal in the working positions of the turnover plough and aligned transversely to the working direction of the plough, and for rotation about a vertical axis (8) in the transport position of the turnover plough, characterised in that the bearing arrangement (4) predetermines two separate axes (8, 10) as a pendulum axis and as a vertical axis for the wheel carrier (5) and a changeover device (17, 18, 19, 20) is provided for the selective release of the mobility of the wheel carrier (5) about only one of the two axes (8, 10).

2. A turnover plough according to claim 1, characterised in that the bearing arrangement (4) comprises an outer bearing sleeve (7) predetermining the first axis (8), and an intermediate bearing sleeve (9) which is mounted therein and predetermines the second axis (10) and in which there is mounted a pivot pin (11) connected to the wheel carrier (5).

3. A turnover plough according to claim 2, characterised in that the axis (8) predetermined by the outer bearing sleeve (7) for the intermediate bearing sleeve (9) is the vertical axis and the axis (10) predetermined by the intermediate bearing sleeve (9) for the pivot pin (11) is the pendulum axis.

4. A turnover plough according to any one or more of claims 1 to 3, characterised in that the axes (8, 10) lie on one plane and intersect one another at an acute angle ($\alpha$).

5. A turnover plough according to claims 2 and 4, characterised in that the pivot pin (11) of the wheel carrier (5) is mounted in the intermediate bearing sleeve by means of a bearing ball and is supported for angular adjustment by means of an adjusting device.

6. A turnover plough according to claim 5, characterised in that the intermediate bearing sleeve is mounted in the outer bearing sleeve by means of a spherical seating and is in turn supported for angular adjustment by means of an adjusting device.

7. A turnover plough according to any one or more of claims 1 to 6, characterised in that a pivoted catch (17) is supported on the intermediate bearing sleeve (9) in a hinged manner as a changeover device which can be brought alternately into engagement with locking extensions (19) on the outer bearing sleeve (7) or on the wheel carrier (5).

**Revendications**

1. Charrue brabant à roue de support à béquille de roue transporteuse traînée (6), dont le porte-roue (5) est supporté de manière pivotante au moyen d'un dispositif de palier (4) situé sur le châssis de charrue (1), sur un axe de béquille (10) orienté dans les positions de travail de la charrue brabant horizontalement, transversalement par rapport au sens de travail en charrue et tournant en position de transport de la charrue brabant, autour d'un axe de giration (8), caractérisé en ce que le dispositif de palier (4) détermine, pour le porte-roue (5), deux axes (8, 10), spécifiques pour axes de béquille et axe de giration et un dispositif de branchement (17, 18, 19, 20) est prévu pour libérer au choix la mobilité du porte-roue (5) uniquement autour de l'un des deux bras (8, 10).

2. Charrue brabant selon la revendication 1, caractérisée en ce que le dispositif de palier (4) comprend une douille de palier extérieur (7) déterminant le premier axe (8) et une douille de palier intermédiaire (9), montée à l'intérieur, déterminant le deuxième axe (10), douille (9) dans laquelle est monté un tourillon de palier (11) relié au porte-roue (5).

3. Charrue brabant selon la revendication 2, caractérisée en ce que l'axe (8) déterminé par la douille de palier extérieur (7) de la douille de palier intermédiaire (9) est l'axe de béquille et que l'axe (10) déterminé par la douille de palier intermédiaire (9) et le tourillon de palier (11) est l'axe de béquille.

4. Charrue brabant selon une ou plusieurs des revendications 1 à 3, caractérisée en ce que les axes (8, 10) sont situés dans un même plan et se coupent en faisant un angle aigu $\alpha$.

5. Charrue brabant selon les revendications 2 à 4, caractérisée en ce que le tourillon de palier (11) du porte-roue (5) est monté dans la douille de palier intermédiaire au moyen d'une sphère de palier et est supporté de manière angulairement réglable moyen d'un réglage.

6. Charrue brabant selon la revendication, caractérisée en ce que la douille de palier intermédiaire est montée dans la douille de palier extérieur au moyen d'un palier sphérique et est supportée de son côté de manière angulairement réglable au moyen d'un dispositif de réglage.

7. Charrue brabant selon une ou plusieurs des revendications 1 à 6, caractérisée en ce qu'un verrou de pivotement (17) servant de dispositif de branchement est supporté rabattable sur la douille de palier intermédiaire (9), qui est alternativement disposable en prise avec les appendices de verrouillage (19) sur la douille de palier extérieur (7) ou sur le porte-roue (5).

Fig. 1

Fig. 2

Fig.3

Fig. 4